# EUROPEAN PATENT APPLICATION

(11) **EP 2 431 639 A1**
(43) Date of publication of application: **21.03.2012**
(21) Application number: 09844484.7
(22) Date of filing: 15.05.2009
(51) Int. Cl.: F16K 7/00

(54) **DIAPHRAGM VALVE**

(71) Applicant: Shie Yu Machine Parts Ind Co., Ltd., Taichung County, Taiwan (CN)
(72) Inventor: TSAI, Chi-Lung, Taichung County Taiwan (CN)
(74) Representative: Viering, Jentschura & Partner
(86) International application number: PCT/CN2009/000526
(87) International publication number: WO 2010/130067

(57) **Abstract**

A valve for liquids includes a main body and an upper lid or a connector. The main body is provided with a flow passage, an annular connecting circumference, an opening surrounded by the annular connecting circumference, and at least a metal ring integrally wrapped in the annular connecting circumference. The upper lid or the connector is provided with an annular connecting circumference having at least one metal ring integrally wrapped in it. Therefore, after having the main body combined with the upper lid or the connector, the valve can withstand comparatively large fluid pressure so as to prolong service life and be used to a wider application.

## Description

### BACKGROUND OF THE INVENTION

### 1. Field of the Invention

This invention relates to a valve for fluids, particularly to one able to be applied to diverse applications. With at least a metal ring integrally wrapped in an annular connecting circumference of a main body and an upper lid or a connector, the valve can withstand large fluid pressure so as to prolong service life and be used to a wide application after having the main body combined with the upper lid or the connector.

### 2. Description of the Prior Art

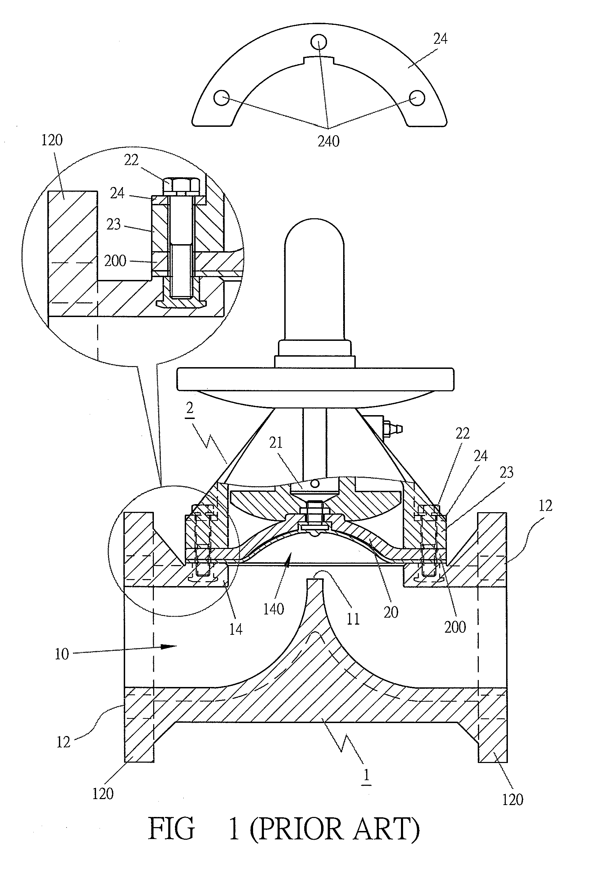

Commonly, as shown in Fig. 1, a conventional diaphragm valve includes a main body 1 and an upper lid 2. The main body 1 is provided with a flow passage 10 integrally formed in the interior, a projection 11 located at the middle of the flow passage 10 for co-working with the upper lid to open or close the valve to enable a fluid to pass through or not. Respectively formed at two sides of the main body 1 is an annular connecting portion 12, which is provided with an outer annular circumference 120 employed to connect with tubing. Further, the main body 1 is also provided with an annular connecting circumference corresponding to the upper lid 2 and forming an opening 140 in it.

The upper lid 2 is provided with a valve sheet 20 positioned at a bottom, a valve rod 21 connected with the center of the valve sheet 20, and an annular connecting circumference 23. The valve sheet 20 is provided with an annular circumference 200 for being combined with the annular connecting circumference 23 and the annular connecting circumference 14 of the main body 1 by means of plural fixing elements 22. In order to enable the diaphragm valve to withstand higher pressure, plural arc-like metal sheets 24 are installed on the annular connecting circumference 23, respectively provided with plural through holes 240 bored at proper locations for being inserted by the fixing elements 22. By means of the valve rod 21, the valve sheet 20 can be controlled to contact with or move away from the projection 11 so as to command a fluid to flow through thereof or not.

However, as the arc-like metal sheets 24 are independently installed on the upper lid 2, they can't be integrally formed together with the upper lid 2 firmly, forming a weak section that is possible to be damaged to pose leakage of a fluid. Moreover, if the fluid is acidic or alkaline, the metal sheets 24 are apt to be quickly corroded by the fluid, so that the fluid may leak out of the valve, shortening service life of the valve, with its application being restricted.

### SUMMARY OF THE INVENTION

The object of this invention is to offer a valve structurally strengthened to be used in a diaphragm valve, a true union valve, a swing-type diaphragm valve, a check valve or a butterfly valve for fluids. With at least one metal ring integrally wrapped in an annular connecting circumference of a main body and at least one metal ring integrally wrapped in an annular connecting circumference of an upper lid or a connector, the valve can serve a long period of time and be used to a wide application after having the main body combined with the upper lid or the connector.

The main characteristics of the invention are a main body and an upper lid or a connector. The main body is provided with a flow passage, an annular connecting circumference and at least a metal ring integrally wrapped in the annular connecting circumference. The upper lid or the connector is provided with an annular connecting circumference and at least one metal ring integrally wrapped in the annular connecting circumference. The valve can thus withstand comparatively large fluid pressure so as to prolong service life and be used to a wider application after having the main body combined with the upper lid or the connector. Moreover, the main body is further provided with an annular connecting portion formed at two sides respectively, with at least one metal ring integrally wrapped in an outer annular circumference of each of the annular connecting portion so as to as well advance service life of the valve.

### BRIEF DESCRIPTION OF DRAWINGS

This invention is better understood by referring to the accompanying drawings, wherein:
Fig. 1 is a cross-sectional view of a conventional diaphragm valve;
Fig. 2 is a side view of a first preferred embodiment of a (diaphragm) valve for fluids in the present invention;
Fig. 3 is a cross-sectional view of a "A-A" line in Fig. 2;
Fig. 4 is a front view of a first sort of a metal ring in the present invention;
Fig. 5 is a front view of a second sort of the metal ring in the present invention;
Fig. 6 is a cross-sectional view of a second preferred embodiment of a (diaphragm) valve for fluids in the present invention;
Fig. 7 is a cross-sectional view of a third preferred embodiment of a (true union diaphragm) valve for fluids in the present invention;
Fig. 8 is a front view of a third sort of the metal ring in the present invention;
Fig. 9 is a cross-sectional view of a fourth preferred embodiment of a (swing-type diaphragm) valve for fluids in the present invention;
Fig. 10 is a cross-sectional view of a fifth preferred embodiment of a (check) valve for fluids in the present invention;
Fig. 11 is a side view of a sixth preferred embodiment of a (butterfly) valve for fluids in the present invention; and
Fig. 12 is a cross-sectional view of a "B-B" line in Fig. 11.

### DETAILED DESCRIPTION OF THE PREFERRED EMBODIMENT

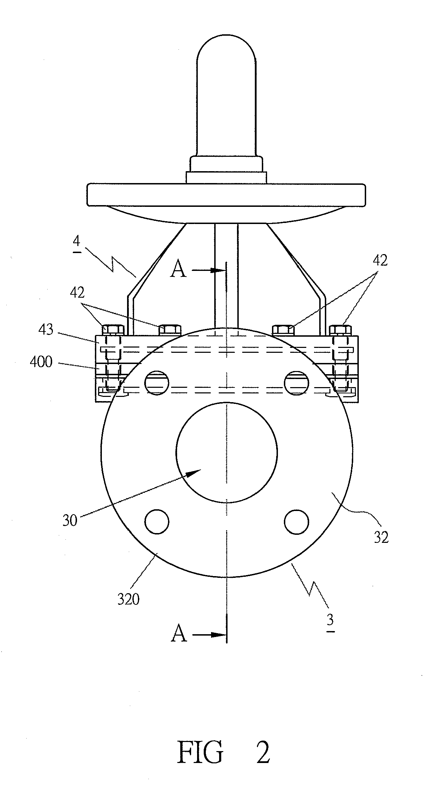

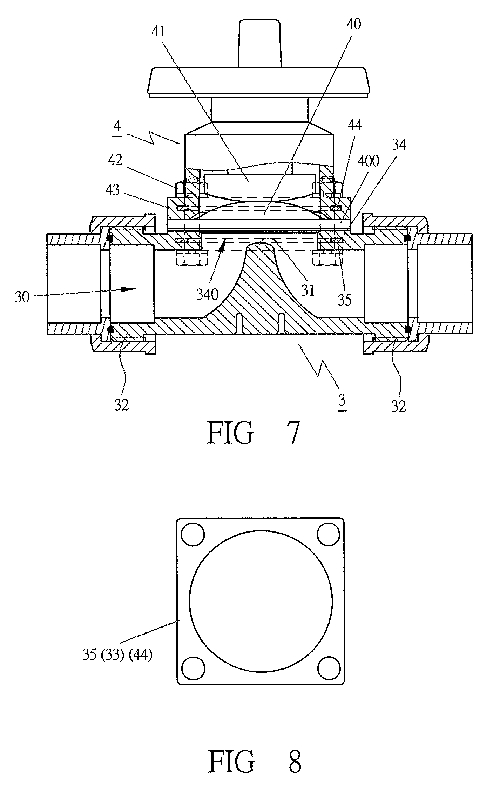

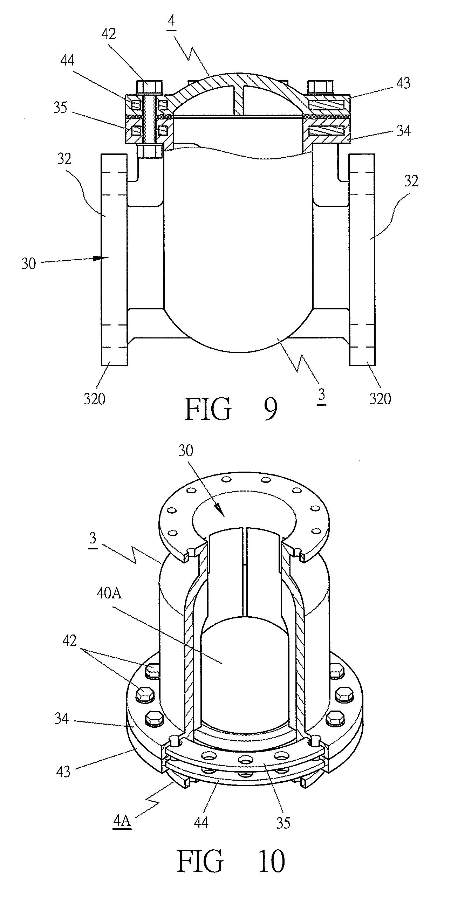

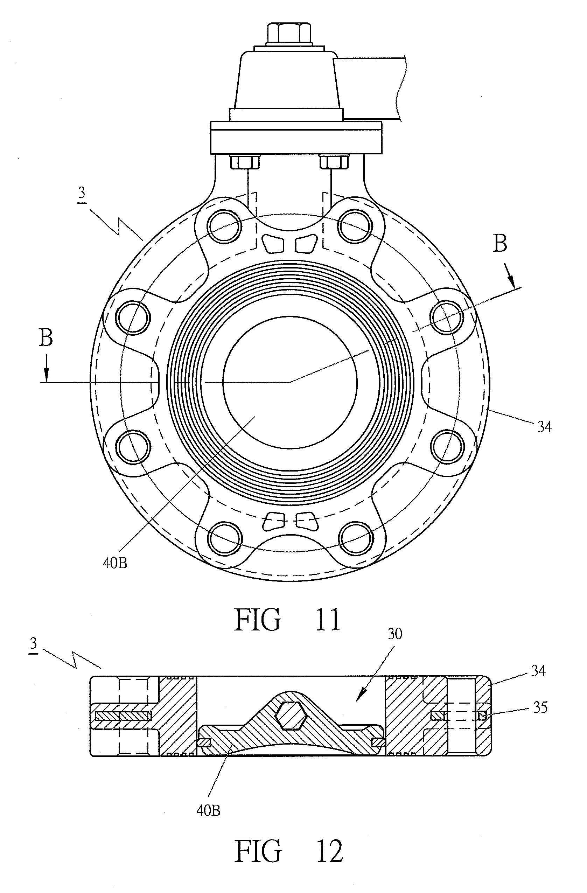

A valve for liquids in the present invention can be used in various applications, such as a diaphragm valve as shown in Figs. 2, 3 and 6, a true union diaphragm valve as shown in Figs. 7 and 8, a swing-type diaphragm valve as shown in Fig. 9, a check valve as shown in Fig. 10, and a butterfly diaphragm valve as shown in Figs. 11 and 12. The valve of all embodiments in the present invention includes a main body 3 and an upper lid 4.

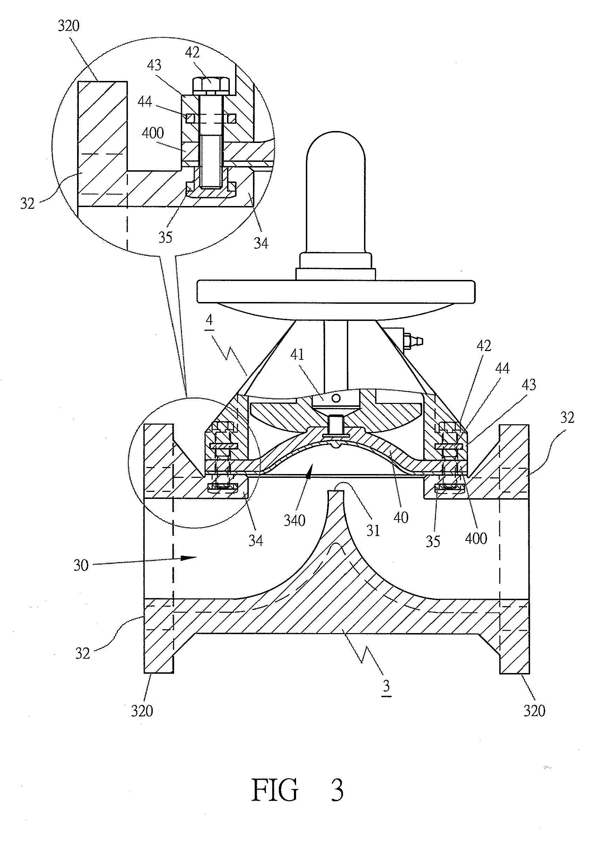

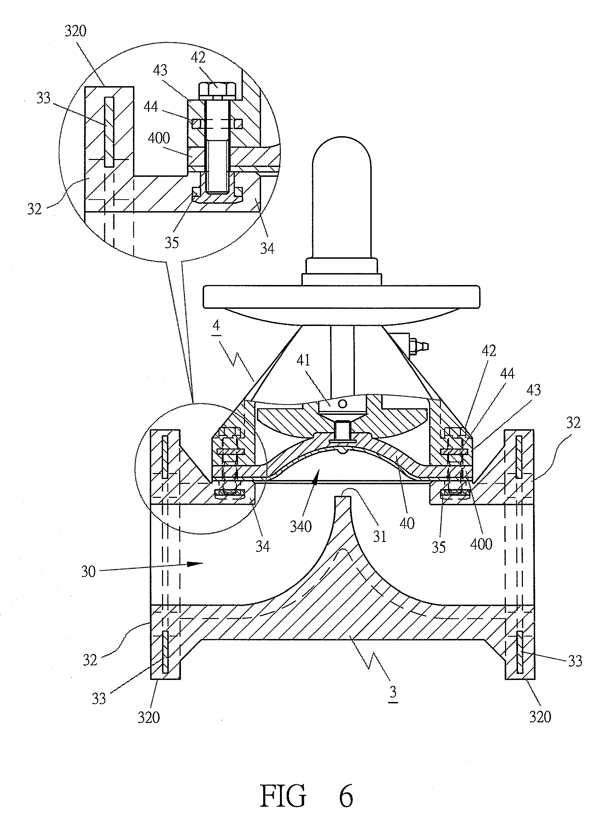

The main body 3 is provided with a flow passage 30 employed to collaborate with a valve sheet 40 as shown in Figs. 3, 6, 7 and 9, with a ball valve 40A as shown in Fig. 10, or with a door valve 40B as shown in Fig. 12, so as to keep the flow passage 30 opened or closed to enable a fluid to pass through thereof or not. As shown in Figs. 3, 6 and 7, the main body 3 is further provided with an annular connecting portion 32 formed at two sides respectively, which can be integrally reinforced with at least a metal ring 33 wrapped in an outer annular circumference 320 as shown in Fig. 6, so that the main body 3 can be structurally strengthened to prolong service life.

Also, as shown in Figs. 3, 6, 7, 9 or 10, the main body 3 is further provided with an annular connecting circumference 34 formed in a top to combine with the upper lid 4, and at least a metal ring 35 integrally wrapped in the annular connecting circumference 34. Surrounded by the annular connecting circumference 34 is an opening 340. As for the butterfly valve shown in Fig. 12, the main body 3 is also provided with an annular connecting circumference 34 and at least a metal ring 35 integrally wrapped in the annular connecting circumference 34.

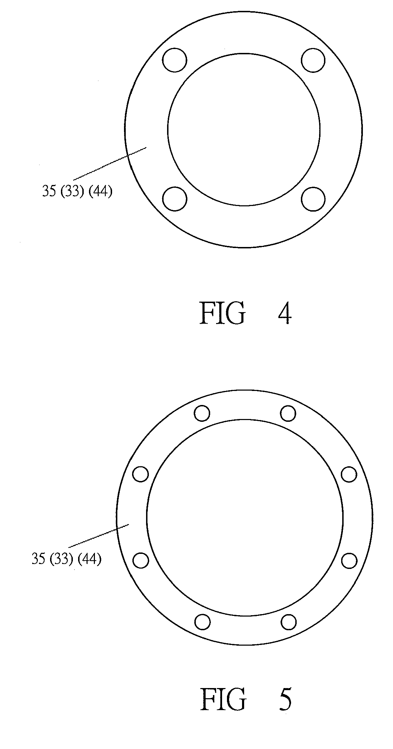

The metal rings 35 (or 33, 44) can be designed with different diameters as shown in Figs. 4 and 5, and different shapes as shown in Fig. 8. In addition, each of the metal rings 35 (or 33, 44) is bored with plural holes that may vary in quantity and diameter and are located properly to let fixing elements pass through to keep the main body 3 combined with the upper lid 4 and the annular connecting portion 32 of the main body 3 appropriately connected with other components, so that the valve can work effectively.

The upper lid 4 is provided with a valve sheet 40 positioned at a bottom, as shown in Figs. 3, 6, 7 or 9, a valve rod 41 connected with the center of the valve sheet 40, and an annular connecting circumference 43. The valve sheet 40 is provided with an annular circumference 400 used to be combined with the annular connecting circumference 43 and the annular connecting circumference 34 of the main body 3 by means of plural fixing elements 42. By means of the valve rod 41, the valve sheet 40 can be controlled to contact with or move away from a projection 31 so as to command a fluid to flow through or not. Moreover, the upper lid 4 is further provided with at least a metal ring 44 integrally wrapped in the annular connecting circumference 43.

Or, as shown in Fig. 10, a connector 4A has at least one metal ring 44 integrally wrapped in the annular connecting circumference 43.

With the main body 3 combined with the upper lid 4 as shown in Figs. 3, 6, 7 or 9, the main body 3 combined with

With the main body 3 combined with the upper lid 4 as shown in Figs. 3, 6, 7 or 9, or with the main body 3 combined with the connector 4A as shown in Fig 10, or with the butterfly valve as shown in Fig. 12 the valve according to the present invention is provided with at least one metal ring in its interior for strengthening to withstand comparatively large fluid pressure, so the valve can serve a long period of time and be used to a wide application.

While the preferred embodiment of the invention has been described above, it will be recognized and understood that various modifications may be made therein and the appended claims are intended to cover all such modifications that may fall within the spirit and scope of the invention.

## Claims

1. A valve for liquids, said valve comprising:
a main body provided with a flow passage, an annular connecting circumference, an opening surrounded by said annular connecting circumference, at least a metal ring integrally wrapped in said annular connecting circumference; and
an upper lid or a connector provided with an annular connecting circumference, at least one metal ring integrally wrapped in said annular connecting circumference, said valve able to withstand more fluid pressure so as to prolong service life and be used to a wider application after having said main body combined with said upper lid or said connector.

2. The valve for liquids as claimed in Claim 1, wherein said valve is provided with an annular connecting portion having its outer annular circumference integrally combined with at least one metal ring.
